# EUROPEAN PATENT APPLICATION

(11) **EP 4 270 596 A1**
(43) Date of publication of application: **01.11.2023**
(21) Application number: 21910919.6
(22) Date of filing: 22.12.2021
(51) Int. Cl.: H01M 10/613, H01M 10/625, H01M 10/647, H01M 10/6555, H01M 10/658, H01M 50/20

(54) **BATTERY PACK**

(30) Priority: 22.12.2020 JP 2020212403
(71) Applicant: Mitsubishi Chemical Corporation, Chiyoda-ku Tokyo 100-8251 (JP)
(72) Inventor: NINOMIYA, Naoya, Tokyo 100-8251 (JP); KAWAI, Tomohiro, Tokyo 100-8251 (JP)
(74) Representative: Vossius & Partner Patentanwälte Rechtsanwälte mbB
(86) International application number: PCT/JP2021/047732
(87) International publication number: WO 2022/138779

(57) **Abstract**

Provided is a battery pack in which cells and a separation member that separates the cells are stacked, wherein the separation member has a heat insulating portion, a compression modulus of the heat insulating portion in stacking direction is 0.5 to 10 MPa, and the separation member has a noncontact region in which the heat insulating portion is not in contact with the cells. A battery pack in which contact between adjacent cells due to expansion of cells is prevented and the safety of the battery pack can be maintained can be provided.

## Description

### Technical Field

The present invention relates to a battery pack.

### Background Art

Conventionally, in a cell module including a secondary cell (hereinafter, also referred to as a cell) to be mounted on a mobile body such as a vehicle or a ship, various members may be placed between cells for various purposes.

For example, PTL 1 discloses a secondary cell module in which a buffer plate is placed between cells to allow expansion of cells and properly maintain the surface pressure imparted to each cell. PTL 2 discloses a battery pack in which a heat conductive member having a resin member having a high bending modulus as a base material is placed between cells to suppress the heat transfer to adj acent single battery cells and efficiently dissipate heat to a heat dissipating space.

### Citation List

### Patent Literature

PTL 1: JP 2014-157747 A
PTL 2: JP 2011-108617 A
PTL 3: JP 2019-175718 A

### Summary of Invention

### Technical Problem

In both PTL 1 and PTL 2, the buffer plate and the heat conductive member are placed in contact with each cell to exhibit the functions of the buffer plate and the heat conductive member.

Cells that constitute a battery pack are, for example, arranged in the thickness direction and accommodated in a case with pressure applied in the thickness direction, and thus pressure is also applied to a member sandwiched between cells. A cell is known to expand when the cell is charged or the temperature of the cell becomes high. In this case, further pressure will be applied to the member sandwiched between cells. That is, when the member is provided in contact with each cell, as in PTLs 1 and 2, there is concern about the deformation and damage of the member due to expansion pressure of the cell caused by the cell being charged and the temperature of the cell becoming high by the use of the battery pack. Then, when the cell in such a state generates heat, it is more likely that the heat will be easily transmitted to surrounding cells and the safety of the battery pack will not be maintained.

PTL 3 discloses a technique for stacking battery cells by combining a support and an expansion portion having a large heat expansion coefficient than the support. In the art, when the expansion portion is expanded due to occurrence of abnormality, the pressure between the stacked cells is increased. Thus, to restraint and maintain the shape of the entire battery stack, the cell module case needs to be highly strong, and there is a problem that the weight of the battery stack is increased.

The present invention has been made in view of the problems, and an object thereof is to provide a battery pack in which contact between adjacent cells due to expansion of cells is prevented and the safety of the battery pack can be maintained.

### Solution to Problem

The present inventors have intensively studied to solve the problems, found that the problems can be solved by providing a separation member having a heat insulating portion in all spaces between the stacked cells, the separation member having a heat insulating portion having a certain compression modulus in stacking direction, and further providing a noncontact region in which the separation member and the cell facing thereto are not in contact with each other, and completed the following present invention. That is, the present invention is as follows.

[1] A battery pack in which cells are stacked, including: a separation member in at least one of spaces between the cells,
   wherein the separation member has a heat insulating portion, a compression modulus of the heat insulating portion in stacking direction of the cells is 0.5 to 10 MPa, and the separation member has a noncontact region that is not in contact with the cells.
[2] The battery pack according to [1] above, including the separation member in all spaces between the cells.
[3] The battery pack according to [1] or [2] above, wherein the separation member has a support outside the heat insulating portion in plane direction perpendicular to stacking direction of the cells, and the support is in contact with at least one of the cells.
[4] The battery pack according to [3] above, wherein a compression modulus of the support in stacking direction of the cells is 0.5 to 100 MPa.
[5] The battery pack according to any one of [1] to [4] above, wherein a distance between the noncontact region and each of the cells above the noncontact region is 0.1 to 2.5 mm.
[6] The battery pack according to any one of [1] to [5] above, wherein a ratio (S_{N}/S_{I}) of an area of the noncontact region (S_{N}) to an area of the heat insulating portion (Si) in plan view is 0.3 to 1.
[7] The battery pack according to any one of [3] to [6] above, wherein a ratio (S_{S}/S_{P}) of an area of the support (Ss) to an area of the separation member (S_{P}) in plan view is 0.02 to 0.2.
[8] The battery pack according to any one of [1] to [7] above, wherein the separation member in plan view is rectangular, and the support on the separation member is linear and forms at least a pair of opposite sides.
[9] The battery pack according to any one of [1] to [8] above, wherein the heat insulating portion contains a liquid.
[10] The battery pack according to [9] above, wherein the heat insulating portion is a porous heat insulating material and the liquid is contained in the porous heat insulating material.
[11] The battery pack according to any one of [1] to [10] above, wherein the heat insulating portion is accommodated in an exterior body.
[12] The battery pack according to [11] above, wherein the exterior body includes a stack including metal foil and a thermoplastic resin layer.
[13] The battery pack according to [12] above, wherein a metal that constitutes the metal foil is at least one of aluminum, copper, tin, nickel, stainless steel, lead, tin-lead alloy, bronze, silver, iridium, and phosphor bronze.
[14] A method of producing a battery pack in which cells are stacked, including the steps of: placing a separation member in at least one of spaces between the cells,
wherein the separation member has a heat insulating portion and a compression modulus of the heat insulating portion in stacking direction of the cells is 0.5 to 10 MPa; and fixing the separation member with pressure applied in thickness direction of the heat insulating portion of the separation member to provide a noncontact region in which the separation member is not in contact with the cells.

### Advantageous Effects of Invention

According to the present invention, a battery pack in which contact between adjacent cells due to expansion of cells is prevented and the safety of the battery pack can be maintained can be provided.

### Brief Description of Drawings

Fig. 1 is a cross-sectional view showing an example of a battery pack according to the first embodiment.
Fig. 2 is a cross-sectional view showing an example of a battery pack according to the second embodiment.
Fig. 3 is a diagram showing an example of a separation member, (A) is a plan view, and (B) is a cross-sectional view cut along X-X shown in (A).
Fig. 4 is a cross-sectional view showing an example of a battery pack according to another embodiment.
Fig. 5 is a plan view showing an example of a separation member.
Fig. 6 is a diagram showing another example of a separation member, (A) is a plan view, and (B) is a cross-sectional view cut along X-X shown in (A).
Fig. 7 is a diagram showing another example of a separation member, (A) is a plan view, (B) is a cross-sectional view cut along X-X shown in (A).
Fig. 8 is a diagram showing another example of a separation member, (A) is a plan view, (B) is a cross-sectional view cut along X-X shown in (A).
Fig. 9 is a plan view showing an example of a cell.
Fig. 10 is a front view of the cell of Fig. 9.
Fig. 11 is a side view of the cell of Fig. 9.
Fig. 12 is a diagram in which the relationship between the press pressure (restraining pressure) and the thickness retention rate in a heat insulating portion of a separation member is plotted.
Fig. 13 is a diagram showing an example of a battery pack when cells are expanded (an example in which a support is not used).
Fig. 14 is a diagram showing an example of a battery pack when cells are expanded (an example in which a support is used).

### Description of Embodiments

Hereinafter, the present invention will be described based on embodiments. However, the present invention is not limited to the embodiments described below.

In the present specification, the description of "X to Y" (X and Y are any numbers) encompasses, in addition to the meaning of "X or more and Y or less", the meaning of "preferably more than X" or "preferably less than Y" unless otherwise indicated. The description of "X or more" (X is any number) encompasses the meaning of "preferably more than X" unless otherwise indicated, and the description of "Y or less" (Y is any number) encompasses the meaning of "preferably less than Y" unless otherwise indicated.

### [First Embodiment]

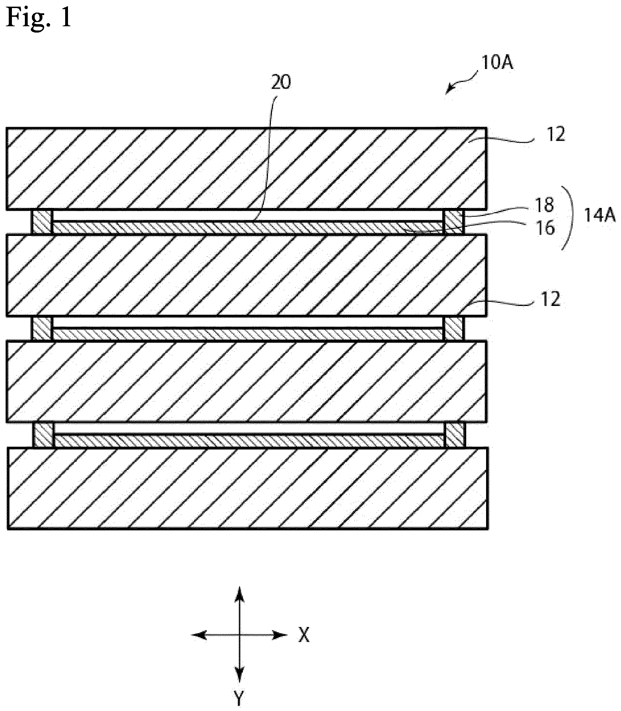

As shown in Fig. 1, in a battery pack 10A according to the first embodiment, cells 12 and a separation member 14A for separating the cells 12 are stacked. The separation member 14A is a member that is provided at least in all spaces between the cells 12 that constitute the battery pack 10A and prevents the cells 12 from coming into contact with each other. The separation member 14A can also be used to separate the cells 12 and other members, in addition to separate the cells 12.

Though in the example shown in Fig. 1, the separation member 14A is stacked in all spaces between the cells 12, the separation member14A does not necessarily need to be placed in all spaces between the cells 12, and the separation member only needs to be placed in at least one of spaces between the cells.

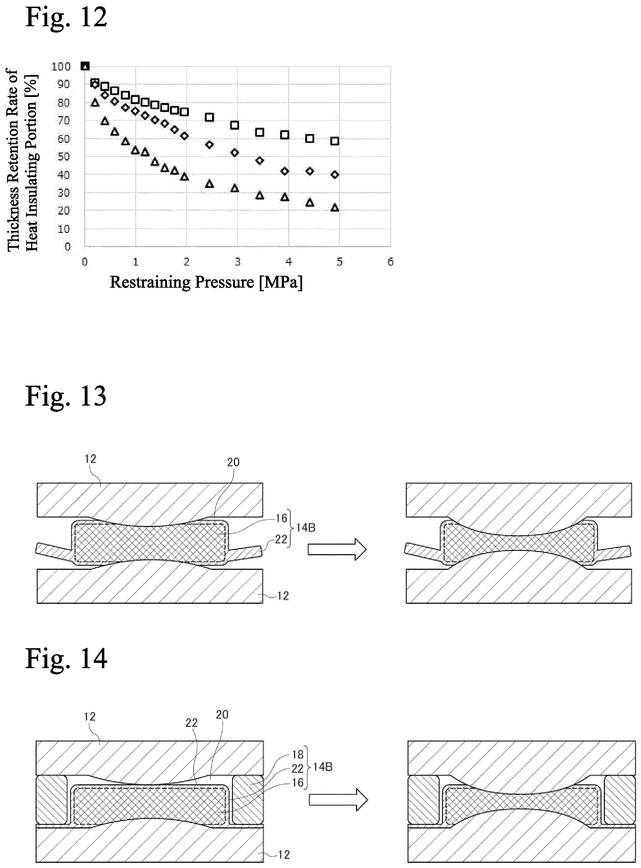

The separation member 14A has a heat insulating portion 16, and the compression modulus in stacking direction (Y direction) of the heat insulating portion 16 is 0.5 to 10 MPa. The separation member 14A has a support 18 outside the heat insulating portion 16 in plane direction (X direction) perpendicular to stacking direction, and has a noncontact region 20 that is not in contact with the cells 12. Though the noncontact region 20, in the example shown in Fig. 1, is formed by the support 18 being in contact with and supporting each of the cells 12, the noncontact region 20 can be formed by means other than the support 18. In the present invention, it is sufficient if the noncontact region 20 is formed, and the support 18 or an alternative member thereof can be omitted. For example, as shown in Fig. 13, the noncontact region 20 can be a noncontact region produced over the heat insulating portion and the separation member by the heat insulating portion 16 being slightly compressed and the end portion of the separation member curling up due to the pressure of assembly during assembly of the cells and the separation member. Though the heat insulating portion is further compressed during expansion of the cells, it is sufficient if a sufficient thickness to exhibit a heat insulating performance is maintained.

As shown in Fig. 14, also in an embodiment having a separation member, the heat insulating portion is slightly compressed due to the pressure of assembly. Thus the end portion of the separation member can be curled up by the heat insulating portion being compressed. In this embodiment, because there is a support, the noncontact portion is easily adjusted and the noncontact portion is also easily produced on the heat insulating portion, which is preferable.

Figs. 13 and 14 are conceptual diagrams showing embodiments in which the heat insulating portion is slightly compressed and assembled, and the diagrams located right side of the arrows are conceptual diagrams each showing a state in which cells are expanded and further compressed the heat insulating portion. Both are conceptually illustrative of the relationship between cells and the heat insulating portion, and the expression is somewhat exaggerated.

It is known that cells that constitute a battery pack expand as they are used. The present inventors have obtained a finding that the initial expanding pressure in expansion of cells is about 0.1 MPa and the expansion pressure finally increases to about several MPa. Thus, in the present invention, the compression modulus of the heat insulating portion 16 of the separation member 14A is set to 0.5 to 10 MPa to give flexibility, and includes the range of the expansion pressure. Meanwhile, when the expansion of cells occurs locally (for example, centrally), local pressure is also applied to the heat insulating portion 16 of the separation member 14A. The heat insulating portion 16 which has flexibility is compressed more at the place where local pressure is applied, sufficient heat insulating property is not exhibited, and heat is conducted to surrounding cells.

Thus, in the present invention, a battery pack is provided with a noncontact region in which a separation member is not in contact with cells, cells are entirely freely expanded to some extent for the initial expansion of cells without restraint by the separation member, and thus safety can be well maintained. In the battery pack, when cells are further expanded, the expansion pressure is absorbed in the heat insulating portion having flexibility, thus the heat insulating effect of the heat insulating portion 16 is sufficiently exhibited, the heat is less likely to be transmitted to the surrounding cells, and the safety can be maintained well.

Another effect of presence of a noncontact region in which a separation member is not in contact with cells in the battery pack is, for example, that the shear force at the time of assembly of the battery pack is dispersed in the noncontact region, and the plastic deformation of the heat insulating portion can be prevented. Preferably, the battery pack has a noncontact region in which the heat insulating portion of the separation member is not in contact with cells.

The heat insulating portion refers to a portion in which the heat insulating action is exhibited, and refers to a portion including a heat insulating material as described later. In a separation member in which a heat insulating portion is accommodated in an exterior body, a noncontact region in which the separation member is not in contact with cells can be formed on the heat insulating material at the part where a heat insulating material is not covered with the exterior body. In a separation member in which a heat insulating portion is accommodated in an exterior body, a noncontact region in which the separation member is not in contact with cells can be formed on the part of the exterior body directly above the heat insulating material at the part where the heat insulating material is covered with the exterior body.

### [Second Embodiment]

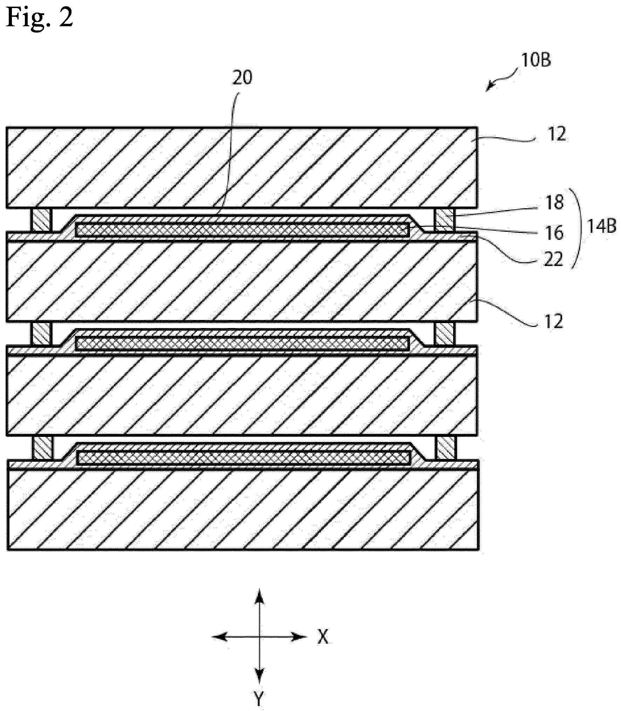

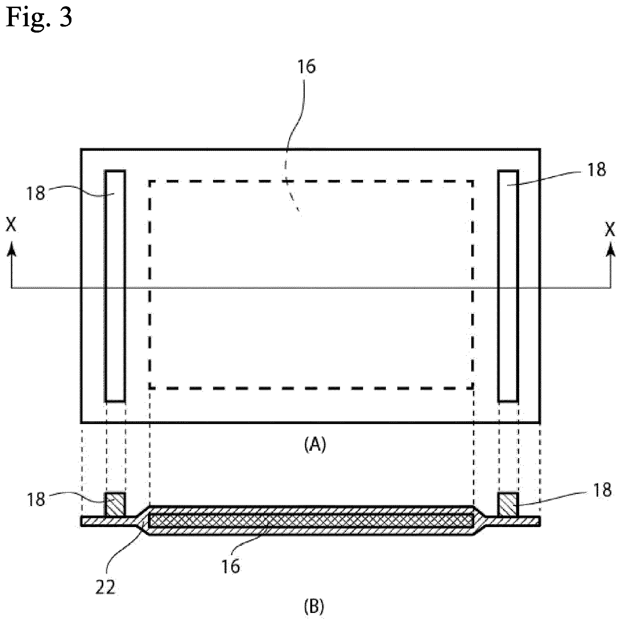

As shown in Fig. 2, in a battery pack 10B according to the second embodiment, cells 12 and a separation member 14B for separating the cells 12 are stacked, and in the separation member 14B, a heat insulating portion 16 thereof is accommodated in an exterior body 22. The separation member 14B, as shown in Fig. 3, has a support 18 outside the heat insulating portion 16 in plane direction (X direction) perpendicular to stacking direction on the exterior body 22, and has a noncontact region 20 that is not in contact with cells 12. The noncontact region 20, same as in the first embodiment, is formed by the support 18 being in contact with and supporting each of the cells 12. The second embodiment is the same as the first embodiment except that the heat insulating portion 16 is accommodated in the exterior body 22. As in the second embodiment, when the heat insulating portion 16 is accommodated in the exterior body 22, the effect of diffusing the heat transferred when the temperature of cells 12 becomes high to the plane direction of the exterior body is exhibited, the heat transferred locally to the contact area portion can be diffused, and the heat insulating properties can be further improved.

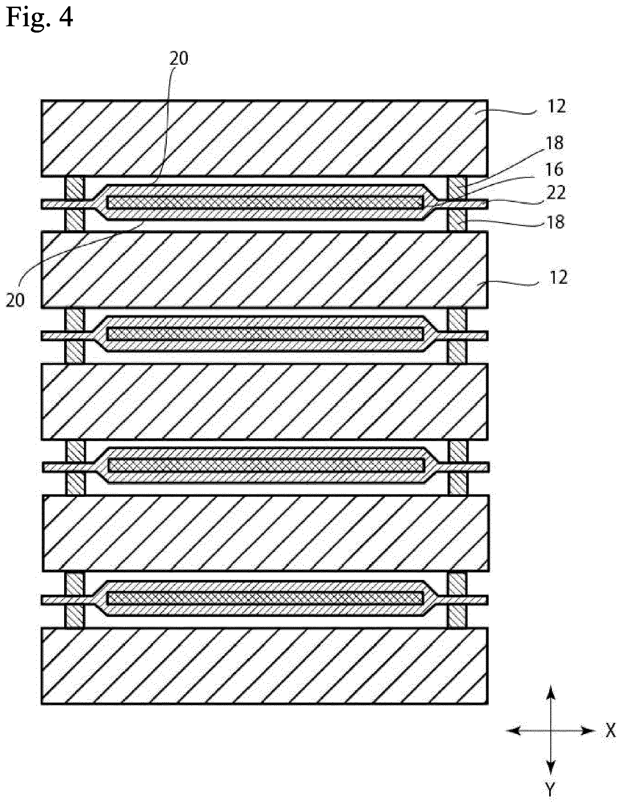

In both of the first embodiment and the second embodiment, though the noncontact regions 20 of the separation members 14A and 14B are provided on one side in stacking direction, the noncontact regions 20 can be provided in both sides. For example, in Fig. 2, though the noncontact region 20 of the separation member 14B is provided in one side in stacking direction, the noncontact region 20 can be provided on both sides as shown in Fig. 4. In this case, the support 18 is provided outside the heat insulating portion 16 in plane direction (X direction) perpendicular to stacking direction on both sides of the exterior body 22.

In the present invention, the compression modulus of the heat insulating portion is set to 0.5 to 10 MPa as described above in consideration of the expansion pressure of single battery cells. By setting the compression modulus of the heat insulating portion to 0.5 MPa or more, the stress of expansion of single battery cells during charging and discharging and further expansion due to deterioration over time can be absorbed, and the life of cells can be extended. From the above viewpoint, the compression modulus of the heat insulating portion is preferably 0.8 MPa or more, and more preferably 1 MPa or more. The compression modulus of the heat insulating portion is preferably 8 MPa or less, and more preferably 6 MPa or less. By setting the compression modulus to the above range, expansion of single battery cells during charging and discharging and further the local thinning of the heat insulating portion in expansion due to deterioration over time can be prevented, and the heat insulating effect necessary for an abnormal circumstance can be held for a long time. The elastic modulus and the density of the heat insulating material are closely related, and for example, a method of reducing the density when the elastic modulus is required to be reduced, and increasing the density when the elastic modulus is required to be increased can be included.

The compression modulus can be measured by the method described in Test Examples.

When the heat insulating portion 16 is accommodated in the exterior body 22, the exterior body 22 preferably does not influence the compression modulus of the heat insulating portion 16. Thus, the total of the compression modulus of the exterior body 22 and the compression modulus of the heat insulating portion 16 is preferably 0.5 to 10 MPa, and the preferable range is also the same as the compression modulus of the heat insulating material.

It is preferable that a three-dimensional space be formed from the noncontact region to the cell directly above the noncontact region and an air layer be formed in the space. The presence of the air layer allows the initial expansion of cells to proceed entirely to some extent. By inclusion of the noncontact region, the shear force during assembly of the battery pack is dispersed in the noncontact region and plastic deformation of the heat insulating portion can be prevented.

The thicker, the air layer, the better, the heat insulating property. However, there are disadvantages: the size of a foreign matter that enters when the battery pack is assembled is increased, and the space is increased and the cost is increased.
Thus, for example, the thickness of the air layer is preferably designed to be 0.1 to 2.5 mm as the average distance between the noncontact region and the cell directly above the noncontact region, more preferably designed to be 0.2 to 1.5 mm, and further preferably designed to be in the range of 0.2 to 1 mm.

From the viewpoint of the balance between the air layer and the heat insulating property of the heat insulating portion, the ratio (T_{A}/T_{I}) of the thickness of the air layer (T_{A}) to the thickness of the heat insulating portion (T_{I}) is preferably 0.05 to 1.0, and more preferably 0.07 to 0.8.

The thickness of the heat insulating portion (the total thickness of the heat insulating portion and the exterior body when the heat insulating portion is covered with the exterior body) is preferably 0.5 to 3.0 mm, more preferably 0.6 to 2 mm, and particularly preferably 0.6 to 1.5 mm. By setting the thickness to the above range, even when single battery cells are stacked in high density, a sufficient heat insulating property can be obtained at the time of expansion during charging and discharging of single battery cells and further expansion due to deterioration over time, and the heat insulating effect necessary for an abnormal circumstance can be held for a long time.

In Fig. 1, the noncontact region 20 is present on the one entire surface of the heat insulating portion 16, but the present invention is not limited thereto. The noncontact region 20 can be appropriately set as long as the initial expansion entirely proceeds to some extent. The noncontact region of the separation member preferably does not include the central portion of the heat insulating portion.

The ratio (S_{N}/S_{I}) of the area of the noncontact region (S_{N}) to the area of the heat insulating portion 16 (Si) in plan view is preferably 0.3 to 1. When the ratio is 0.3 to 1, the expansion of cells can be more reliably absorbed. From the above viewpoint, the ratio is more preferably 0.5 to 1, further preferably 0.7 to 1, and particularly preferably 0.9 to 0.95.

The area of the heat insulating portion in plan view is preferably 25 to 200 cm².

The ratio (S_{S}/S_{P}) of the area of the support (Ss) to the area of the separation member (S_{P}) in plan view is preferably 0.02 to 0.2. By setting the ratio to the above range, the noncontact region can be easily stably maintained. From the above viewpoint, S_{S}/S_{P} is more preferably 0.04 to 0.15.

The area (Ss) when there are multiple supports is the sum of the areas of the multiple supports.

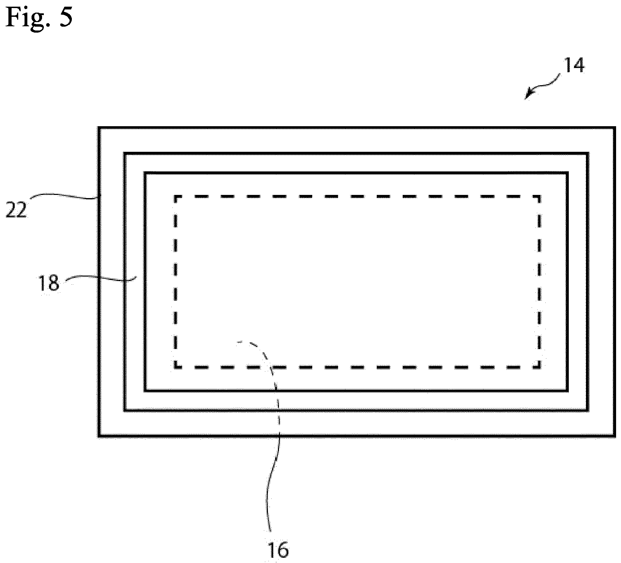

The shape of the separation member is preferably rectangular in plain view, as shown in Figs. 3 and 5, in consideration of productivity and handling, and the area is preferably 60 to 300 cm².

From the viewpoint of sufficiently exhibiting the heat insulating effect of the heat insulating portion, and efficiently obtaining the noncontact region, the heat insulating portion is preferably provided to cover the pressure concentrated portion of the cell in contact with the separation member. The heat insulating portion is preferably provided to cover the pressure concentrated portion, which is generally the central portion in plan view of the stacking surface of cells, that is, the center of gravity in plan view of the contact surface. For example, when the stacking surface of cells is rectangular, the pressure concentrated portion is the intersection point of diagonals, and when the stacking surface of cells is circular, the pressure concentrated portion is the center.

When a support is used, from the viewpoint of sufficiently exhibiting the heat insulating effect of the heat insulating portion, and efficiently obtaining the noncontact region, the support is preferably not present in the central portion of the heat insulating portion covering the pressure concentrated portion of the cell in contact with the separation member, and the support is preferably present in the peripheral portion.

The installation form of the support 18 provided outside the heat insulating portion is preferably a form in which linear opposite sides are formed. Specifically, as shown in Fig. 3, supports on the separation member are preferably provided parallel to the longitudinal direction to form a pair of opposite sides. As another configuration to form at least a pair of opposite sides, as shown in Fig. 5, the support 18 can have a rectangular shape.

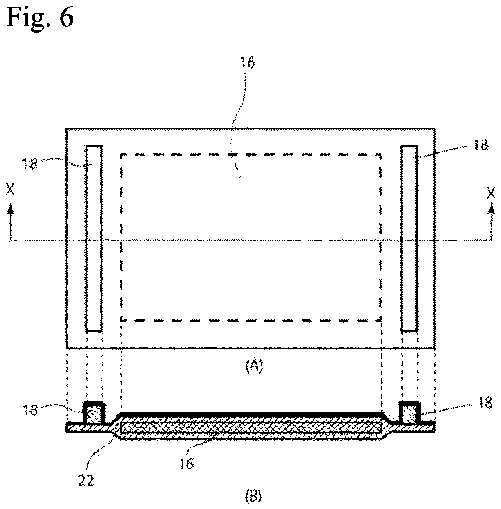

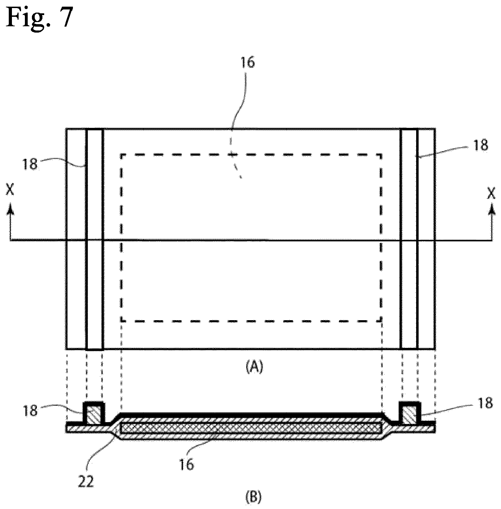

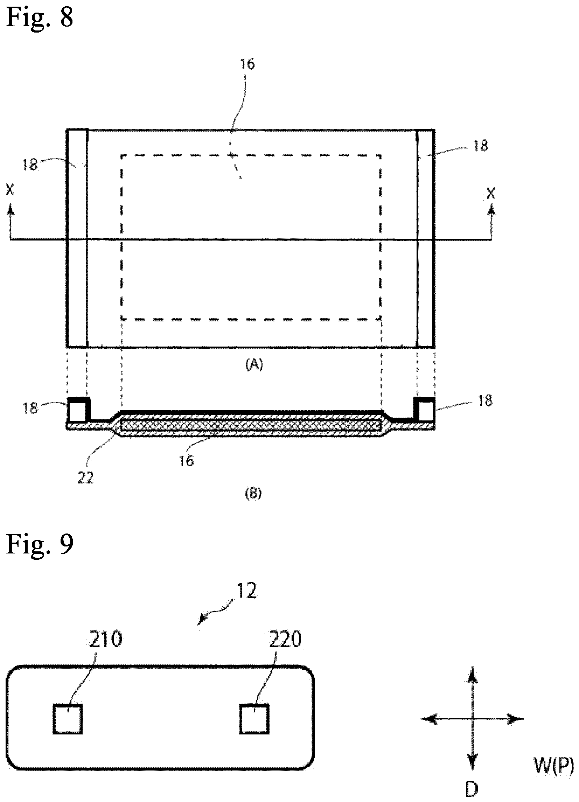

As shown in Figs. 6 to 8, the support 18 can be covered by the exterior body 22. As shown in Fig. 6, for the support 18, supports are preferably provided parallel to the longitudinal direction to form a pair of opposite sides, and also as shown in Fig. 7, the support 18 can extend to the end in the forming direction. Further, as shown in Fig. 8, the end portion of the support 18 in the width direction can be exposed.

Hereinafter, each configuration and the like of the battery pack according to the present invention will be described.

### [Heat Insulating Portion]

The heat conductivity of the heat insulating material that constitutes the heat insulating portion is preferably 0.3 W/(m · K) or less, and preferably 0.1 W/(m · K) or less. The heat conductivity of the heat insulating material can be determined by referring to several methods such as the guarded hot plate method described in JIS A1412-1, the heat flow meter method described in JIS A1412-2, the pulse heating method described in JIS R1611, and the hot wire method and the periodic heating method described in JIS R2616, but the measuring method is not limited thereto. A specific example of measurement by the periodic heating method is as follows: temperature controllable heaters are placed on the upper and lower surfaces of a specimen (heat insulating material), periodic temperature fluctuations in the thickness direction are provided by the upper heater, and the temperature of the lower surface is controlled to a constant temperature by the lower heater. At this time, when the temperature fluctuations propagate from the upper surface to the intermediate surface of the specimen, a phase contrast (time lag) occurs. The diffusivity of heat is determined from the phase contrast, and the heat conductivity is calculated from the product of the specific heat and density.

As the heat insulating material that constitutes the heat insulating portion, a heat insulating material having a density of 0.23 to 1.1 g/cm³ is preferably used. The density of the heat insulating material is preferably not more than the upper limit, because when the density of the heat insulating material is not more than the upper limit, many air layers are contained in the internal air gap and the heat insulating property becomes good. Meanwhile, the density of the heat insulating material is preferably not less than the lower limit, because when the density of the heat insulating material is not less than the lower limit, the deformation amount during compression is reduced. Thus, from the above viewpoints, the density of the heat insulating material is more preferably 0.25 g/cm³ or more, and further preferably 0.28 g/cm³ or more, and more preferably 1.0 g/cm³ or less, and further preferably 0.90 g/cm³ or less. As a method of controlling the density of the heat insulating material, the density can be reduced by reducing the amount of the fiber by making the material porous as described later, and the density can be increased by increasing the amount of the fiber.

The heat insulating portion preferably contains a liquid in terms of increasing the safety of the battery pack. A secondary cell used for the power supply of vehicles or the like is generally used as a battery pack including cells. When one of the component cells is damaged by over-charging or internal short circuit or the like, the cell surface temperature exceeds several hundred degrees, the heat is transmitted to the surrounding cells, and damage may spread to the entire battery pack in a chain-like manner. When one of the component cells generates heats abnormally, the liquid volatilizes and absorbs the heat of vaporization from the surroundings, and the temperature rise can be suppressed. The heat can also escape by the escape of the evaporated gas. When the heat insulating portion has a liquid, the liquid needs to be held inside the heat insulating portion, and thus suppression of the expansion of cells is particularly a big problem. The presence of an air layer is effective to reduce the load pressure to the heat insulating portion produced by expansion of cells.

The heat insulating material that constitutes the heat insulating portion is preferably a porous heat insulating material to contain a liquid. That is, in the heat insulating portion, a liquid is preferably contained in the porous heat insulating material.

The porous heat insulating material preferably includes a fiber and particles.

The fiber is preferably, for example, at least one selected from the group consisting of paper, cotton sheet, a polyimide fiber, an aramid fiber, a polytetrafluoroethylene (PTFE) fiber, a glass fiber, rock wool, a ceramic fiber, and a biosoluble inorganic fiber, and particularly preferably at least one selected from a glass fiber, rock wool, a ceramic fiber, and a biosoluble inorganic fiber among these. The ceramic fiber is a fiber mainly including silica and alumina (silica : alumina = 40 : 60 to 0 : 100). Specifically, a silica and alumina fiber, a mullite fiber, and an alumina fiber can be used.

The particles are preferably powder inorganic substances, are preferably, for example, at least one selected from the group consisting of silica particles, alumina particles, calcium silicates, clay minerals, vermiculite, mica, cement, pearlite, fumed silica, and aerogels, and are particularly preferably at least one selected from silica particles, alumina particles, calcium silicates, and vermiculite among these. Among calcium silicates, xonotlite, tobermorite, wollastonite, and gyrolite are preferable, and gyrolite is particularly preferable. Gyrolite having a petal structure keeps the porous structure even when it is compressively deformed, and thus is excellent in water holding property. Clay minerals are mainly magnesium silicate (including talc and sepiolite), montmorillonite, and kaolinite.

The heat insulating portion can be entirely formed of the porous heat insulating material. When the heat insulating portion is entirely formed of a porous material, the amount of a liquid held in the cavities can be increased.

As the liquid, a liquid having a boiling point at normal pressure of 80°C or more and 250°C or less is preferable, and a liquid having a boiling point at normal pressure of 100°C or more and 150°C or less is further preferable. The liquid preferably includes, in addition to water, at least one selected from the group consisting of, for example, an alcohol, an ester, an ether, a ketone, a hydrocarbon, a fluorine compound, and a silicone oil. These can be used alone or as a mixture of two or more. The liquid can include an additive such as a substance that imparts non-freezing properties (antifreeze), a preservative, and a pH adjustor. The impartment of non-freezing properties can prevent the exterior body from being damaged by the expansion associated with freezing. The addition of pH adjustors can reduce the possibility that the pH of the liquid will be changed by the component or the like eluted from the powdered inorganic substance, and the powder inorganic substance, the exterior body, and the liquid (water) itself will be deteriorated. The additive is not limited to these and other additives can be added as needed.

### [Exterior Body]

The exterior body mainly accommodates the heat insulating portion in a sealed state. As the exterior body, for example, a resin and/or metal film or sheet can be applied, and for example, a stack in which a metal and a resin are stacked can also be used. It is particularly preferable that such a stack in which a metal and a resin are stacked be used to accommodate the heat insulating portion to obtain a high heat resistance and strength. As the stack having a stacked structure of the metal and the resin, for example, a stack including metal foil and a thermoplastic resin layer, and a stack having three or more layers including a resin layer, metal foil, and a resin sealant layer are preferably applied.

The metal that constitutes metal foil is preferably at least one of aluminum, copper, tin, nickel, stainless steel, lead, tin lead alloy, bronze, silver, iridium, and phosphor bronze. Specifically, the metal is aluminum foil, copper foil, tin foil, nickel foil, stainless steel foil, lead foil, tin-lead alloy foil, bronze foil, silver foil, iridium foil, phosphor bronze foil or the like. In particular, the metal is preferably aluminum foil, copper foil, or nickel foil, and is further preferably aluminum foil. The metal is preferably at least one selected from the examples listed above.

As a resin, though at least one of a thermosetting resin and a thermoplastic resin can be used, a thermoplastic resin is preferably used. Examples of the resin include, for example, olefin resins such as polyethylene and polypropylene, polystyrene, nylons, acrylic resins, epoxy resins, polyurethanes, polyether ether ketones, polyethylene terephthalate, polyphenylene sulfide, polycarbonates, and aramids. In particular, at least one selected from polypropylene, nylons, and polyethylene terephthalate is preferable.

Though the thickness of the exterior body is not particularly limited, it is preferably, for example, 5 µm to 200 µm. When the exterior body is a stack, it is preferable that the metal foil be 3 µm to 50 µm and the resin layer be 2 µm to 150 µm within the above range. Thereby, the heat resistance and low water vapor permeability of the metal foil can be exhibited and the sealing performance can be improved by the resin.

To accommodate the heat insulating portion in the exterior body,
for example, peripheral portions of two exterior body sheets are bonded annularly by heat seal, adhesion or the like, and the heat insulating portion is enclosed in the resulting exterior body and the resulting exterior body is sealed,
or one exterior body is bent and the peripheral portions are bonded by heat seal, adhesion or the like to enclose the heat insulating portion and seal the exterior body. The exterior body is preferably flexible (elastic).

### [Support]

The support is a member that can be preferably used to hold the noncontact region 20 in which cells and the heat insulating portion of the separation member are not in contact with each other in a battery pack after assembly production. When the support is not used, for example, the noncontact region can be obtained by providing a holding component for holding the separation member to the battery pack case, or the noncontact region can be obtained by adjusting the thickness of the heat insulating portion.

Examples of the method of using the support in the separation member include, for example, a method of bonding the support to any position of the heat insulating portion, a method of bonding the support on cells that constitute the battery pack together with the heat insulating portion, a method of providing the support on the package containing the heat insulating portion in the exterior body, and a method of accommodating the support in the exterior body in a state in which the support is placed on the peripheral portion of the heat insulating portion.

The compression modulus in the stacking direction of the support is preferably 0.5 to 100 MPa, more preferably 1 to 50 MPa, further preferably 2 to 50 MPa, and particularly preferably 3 to 25 MPa, from the viewpoint that the thickness can be controlled against the restraining force during assembly.

The thickness of the support (Ts) is preferably 0.8 to 3.5 mm, and more preferably 1.0 to 3.2 mm. The ratio (Ts/Ti) of the thickness of the support (Ts) to the thickness of the heat insulating portion (T_{I}) is preferably 1.0 to 2.2, and more preferably 1.1 to 2.0 from the viewpoint of keeping the air layer good.

The density of the separation member is preferably 0.3 to 2 g/cm³, and more preferably 0.4 to 1.5 g/cm³ from the viewpoint of not excessively increasing the weight as a battery pack while holding the heat insulating property between single battery cells.

### [Cell]

The cell is preferably, for example, a lithium ion secondary cell including a positive electrode and negative electrode capable of storing and emitting lithium ions and an electrolyte. In addition to the lithium ion secondary cell, secondary cells such as a lithium ion all-solid-state battery, a nickel-metal hydride battery, a nickel-cadmium battery, and a lead-acid battery can be applied.

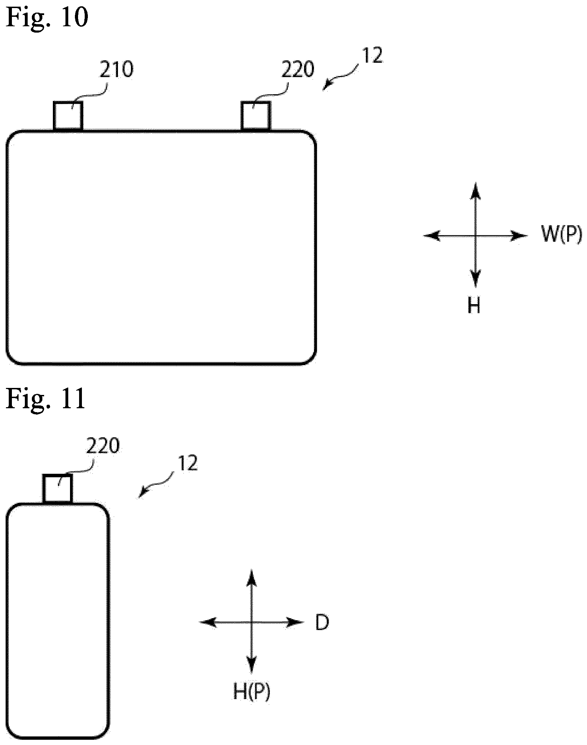

Fig. 9 is a plan view showing an example of the cell 12 that constitutes a battery pack, Fig. 10 is a front view of the cell 12 shown in Fig. 9, and Fig. 11 is a right side view of the cell 12. The cell 12 is formed into a rectangular parallelepiped having a height direction (H), a width direction (W), and a thickness direction (D), and a terminal 210 and a terminal 220 are provided on the upper surface thereof.

The area ratio of the separation member to the cell to which the separation member is applied (separation member area/cell area) is preferably 0.8 or more. When the area ratio is 0.8 or more, the short circuit due to contact between cells is less likely to occur. In addition, the pressure on the surface of cells does not become uneven, the distortion of electrodes in cells does not increase, and thus performance degradation over time is less likely to occur. From the above viewpoints, the area ratio is more preferably 0.9 or more, and further preferably 0.95 or more. From the viewpoint that the cell module case becomes large and the cell energy density as a whole module is reduced, the area ratio is preferably 1.2 or less, more preferably 1.1 or less, and further preferably 1.05 or less.

### [Battery Pack]

The present invention includes a separation member of the present invention in at least one of spaces between cells that constitute a battery pack. The separation member can also be used to separate the cells that constitute a battery pack and other members other than the cells. The present invention preferably includes the separation member of the present invention in all spaces between cells that constitute a battery pack.

As the method of assembling the battery pack, a known method can be employed. Examples of the method include, for example, a method in which cells are arranged, the separation member of the present invention is placed on at least one of spaces between cells or spaces between cells and members other than the cells, and fixing them while applying a pressure of, for example, 1 to 5 kN in the thickness direction of the heat insulating portion of the separation member. Additionally, any member, such as a pan, can be attached. The above is an example, and the application method of the separation member of the present invention to a battery pack is not limited to such an example.

The battery pack according to the embodiments as described above is applied to, for example, a battery pack mounted on, for example, an electric vehicle (EV), a hybrid electric vehicle (HEV), a plug-in hybrid electric vehicle (PHEV), electric heavy equipment, an electric motorcycle, an electric power-assisted bicycle, a ship, an aircraft, a train, an uninterruptible power supply (UPS), a household electricity storage system, and an electricity storage system for stabilizing electric power system utilizing renewable energy such as wind power, solar energy, tidal power, and geothermal energy. However, the battery pack can also be used as a power source for supplying electric power to devices other than the above EVs and the like.

### Examples

### (Evaluation Method)

### Evaluation Method 1 (Test Result 1)

It is assumed that cells that constitute a battery pack are arranged in the thickness direction, a separation member including a heat insulating portion is provided in spaces between the cells, and those are accommodated in a case in a state where pressure is applied in the thickness direction. At this time, the restraining pressure applied in the thickness direction to hold the structure in which cells and the separation members are arranged is defined as a design pressure, and the pressure is set to 2 MPa. Then, it is assumed that each cell expands when the cell is charged or the temperature of the cell becomes high due to the use of the battery pack. The pressure applied to the separation member relative to the expansion (mm) of cells is calculated. When the pressure applied to the separation member exceeds the design pressure, the structure in which cells are arranged cannot be held, or a pressure load is applied to cells, and deformation and destruction of cells occur, resulting in a dangerous condition. Thus, the expansion (mm) of cells when the pressure applied to the separation member exceeds the design pressure was evaluated based on the following criteria.

### Evaluation criteria

A: Expansion of cells is 0.5 mm or more
B: Expansion of cells is 0.4 mm or more and less than 0.5 mm.
C: Expansion of cells is less than 0.4 mm.

The results are shown in Table 1 below.

### Evaluation Method 2 (Test Result 2)

The heat insulating property during cell expansion was evaluated based on the following criteria.

### Evaluation criteria

A : When 2 MPa pressure was applied to the heat insulating portion, 50% or more of the initial thickness of the heat insulating material was held.
B : When 2 MPa pressure was applied to the heat insulating portion, 30% or more and less than 50% of the initial thickness of the heat insulating material was held.
C : When 2 MPa pressure was applied to the heat insulating portion, less than 30% of the initial thickness of the heat insulating material was held.

### (Compression Modulus)

The compression modulus of the heat insulating portion of the separation member (23°C) was measured with reference to JIS K7181. Specifically, the separation member was interposed in a hydraulic press, and the press pressure and displacement during compression were recorded. The compressive stress and compressive strain were determined from the results, and the value obtained by dividing the compressive stress difference by the compressive strain difference was determined as the compression modulus. Fig. 12 shows the relationship between the press pressure (restraining pressure) and the thickness retention rate in the heat insulating portion of the separation member. The compression modulus was determined in the region where the press pressure (restraining pressure) and the thickness retention rate after the start of compression were linearly related.

### (Test Example 1)

A porous sheet as a heat insulating material (vermiculite sheet, length: 120 mm, width: 60 mm, thickness: 0.9 mm, compression modulus: 1.3 MPa) was placed in aluminum laminate film as an exterior body (including polyethylene terephthalate as a resin layer (outside the separation member), polyethylene (inside of the separation member); thickness: 0.11 mm), and enclosed by sealing the peripheral portions of the four sides of the exterior body using a vacuum degassing sealer (manufactured by FUJIIMPULSE Co., Ltd, model number: FCB-200). The obtained packaged material was 150 mm in length and 90 mm in width, and the seal portion of each side was 5 mm wide from the end.

Then, a plate-shaped polybutylene terephthalate resin having a length of 70 mm, a width of 5 mm (the area Ss of support of 700 mm²), a thickness of 1.0 mm as a support was bonded to both ends in a parallel position to form a pair of opposite sides at a position of 1 mm from the peripheral portion of the short side of the exterior body using a double-sided adhesive tape having a thickness of 0.1 mm to obtain a separation member.

The thickness of the air layer on the noncontact region in a battery pack when the obtained separation member is used between two separate cells is 0.2 mm. The ratio (S_{N}/S_{I}) of the area of the noncontact region (S_{N}) to the area of the heat insulating portion (Si) in plan view is 0.92.

The produced separation member was evaluated using the Evaluation Methods 1 and 2. The results are shown in Table 1 below.

### (Test Example 2)

A separation member was obtained in the same manner as in Test Example 1 except that the porous sheet as a heat insulating material was changed to a porous sheet having a different compression modulus (vermiculite sheet, compression modulus: 7.8 MPa). For the produced separation member, the results of evaluation using the Evaluation Methods 1 and 2 are shown in Table 1 below.

### (Test Example 3)

A separation member was obtained in the same manner as in Test Example 2 except that a porous sheet having a different compression modulus (vermiculite sheet, compression modulus: 5.2 MPa) was used as a heat insulating material, the thickness of the support was changed to 0.92 mm, and the thickness of the air layer (T_{A}) was changed to 0.12 mm. For the produced separation member, the results of evaluation using the Evaluation Methods 1 and 2 are shown in Table 1 below.

### (Test Example 4)

A separation member was obtained in the same manner as in Test Example 3 except that the thickness of the support was changed to 2.3 mm and the thickness of the air layer (T_{A}) was changed to 1.5 mm. For the produced separation member, the results of evaluation using the Evaluation Methods 1 and 2 are shown in Table 1 below.

### (Test Example 5)

A separation member was obtained in the same manner as in Test Example 3 except that the thickness of the support was changed to 0.85 mm and the thickness of the air layer (T_{A}) was changed to 0.05 mm. For the produced separation member, the results of evaluation using the Evaluation Methods 1 and 2 are shown in Table 1 below.

### (Test Example 6)

A separation member was obtained in the same manner as in Test Example 3 except that the thickness of the support was changed to 3.3 mm and the thickness of the air layer (T_{A}) was changed to 2.5 mm. For the produced separation member, the results of evaluation using the Evaluation Methods 1 and 2 are shown in Table 1 below.

### (Test Example 7)

A separation member was obtained in the same manner as in Test Example 3 except that the thickness of the support was changed to 1.0 mm, the thickness of the air layer (T_{A}) was changed to 0.2 mm, and ratio (S_{N}/S_{I}) of the area of the noncontact region (S_{N}) to the area of the heat insulating portion (Si) in plan view was changed to 0.72. For the produced separation member, the results of evaluation using the Evaluation Methods 1 and 2 are shown in Table 1 below.

### (Test Example 8)

A separation member was obtained in the same manner as in Test Example 7 except that the ratio (S_{N}/S_{I}) of the area of the noncontact region (S_{N}) to the area of the heat insulating portion (Si) in plan view was changed to 1.0. For the produced separation member, the results of evaluation using the Evaluation Methods 1 and 2 are shown in Table 1 below.

### (Test Example 9)

A separation member was obtained in the same manner as in Test Example 7 except that the ratio (S_{N}/S_{I}) of the area of the noncontact region (S_{N}) to the area of the heat insulating portion (Si) in plan view was changed to 0.39. For the produced separation member, the results of evaluation using the Evaluation Methods 1 and 2 are shown in Table 1 below.

### (Test Example 10)

A separation member was obtained in the same manner as in Test Example 7 except that the ratio (S_{N}/S_{I}) of the area of the noncontact region (S_{N}) to the area of the heat insulating portion (Si) in plan view was changed to 0.92, and the area Ss of the support was changed to 350 mm². For the produced separation member, the results of evaluation using the Evaluation Methods 1 and 2 are shown in Table 1 below.

### (Test Example 11)

A separation member was obtained in the same manner as in Test Example 10 except that the area Ss of the support was changed to 2340 mm². For the produced separation member, the results of evaluation using the Evaluation Methods 1 and 2 are shown in Table 1 below.

### (Test Example 12)

A separation member was obtained in the same manner as in Test Example 10 except that the area Ss of the support was changed to 250 mm². For the produced separation member, the results of evaluation using the Evaluation Methods 1 and 2 are shown in Table 1 below.

### (Test Example 13)

A separation member was obtained in the same manner as in Test Example 10 except that the area Ss of the support was changed to 3200 mm². For the produced separation member, the results of evaluation using the Evaluation Methods 1 and 2 are shown in Table 1 below.

### (Test Example 14)

A separation member was obtained in the same manner as in Test Example 3 except that after a heat insulating material was placed in an exterior body, 5 ml of water was impregnated into the heat insulating material. For the produced separation member, the results of evaluation using the Evaluation Methods 1 and 2 are shown in Table 1 below.

### (Comparative Test Example 1)

A separation member was obtained in the same manner as in Test Example 1 except that the porous sheet as a heat insulating material was changed to a porous sheet having a different compression modulus (vermiculite sheet, compression modulus: 0.3 MPa). For the produced separation member, the results of evaluation using the Evaluation Methods 1 and 2 are shown in Table 1 below.

### (Comparative Test Example 2)

A separation member was obtained in the same manner as in Test Example 1 except that the porous sheet as a heat insulating material was changed to a porous sheet having a different compression modulus (vermiculite sheet, compression modulus: 15 MPa). For the produced separation member, the results of evaluation using the Evaluation Methods 1 and 2 are shown in Table 1 below.

### (Comparative Test Example 3)

A separation member was obtained in the same manner as in Test Example 3 except that the thickness (T_{A}) of the air layer was changed to 0 mm. For the produced separation member, the results of evaluation using the Evaluation Methods 1 and 2 are shown in Table 1 below.

**[Table 1]**

| | Test Example | | | | | | | | | | | | | | Comparative Test Example | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 1 | 2 | 3 |
| Compression modulus of heat insulating portion (MPa) | 1.3 | 7.8 | 5.2 | 5.2 | 5.2 | 5.2 | 5.2 | 5.2 | 5.2 | 5.2 | 5.2 | 5.2 | 5.2 | 5.2 | 0.8 | 15 | 5.2 |
| Thickness of air layer (mm) | 0.2 | 0.2 | 0.12 | 1.5 | 0.05 | 2.5 | 0.2 | 0.2 | 0.2 | 0.2 | 0.2 | 0.2 | 0.2 | 0.12 | 0.2 | 0.2 | 0 |
| S_{N}/S_{I} | 0.92 | 0.92 | 0.92 | 0.92 | 0.92 | 0.92 | 0.72 | 1.0 | 0.39 | 0.92 | 0.92 | 0.92 | 0.92 | 0.92 | 0.92 | 0.92 | 0 |
| S_{S}/S_{P} | 0.049 | 0.049 | 0.049 | 0.049 | 0.049 | 0.049 | 0.049 | 0.049 | 0.049 | 0.025 | 0.165 | 0.018 | 0.225 | 0.049 | 0.049 | 0.049 | 0.049 |
| Test result 1 (mm) | A | A | A | A | B | A | A | A | B | A | A | B | A | A | A | C | C |
| | 0.76 | 0.52 | 0.55 | 1.94 | 0.44 | > 2.0 | 0.59 | 0.61 | 0.42 | 0.53 | 0.80 | 0.42 | 0.80 | 0.55 | > 2.0 | < 0.2 | 0.23 |
| Test result 2 | B | A | A | A | A | A | A | A | A | A | A | A | A | A | C | A | A |
| | 39% | 82% | 58% | 58% | 58% | 56% | 69% | 56% | 78% | 58% | 58% | 58% | 58% | 58% | 17% | 84% | 56% |

### Reference Signs List

10A, 10B: Battery Pack
12: Cell
14, 14A, 14B: Separation Member
16: Heat Insulating Portion
18: Support
20: Noncontact Region
22: Exterior Body
210: Terminal
220: Terminal

## Claims

1. A battery pack in which cells are stacked, comprising: a separation member in at least one of spaces between the cells,
wherein the separation member has a heat insulating portion, a compression modulus of the heat insulating portion in stacking direction of the cells is 0.5 to 10 MPa,
and the separation member has a noncontact region that is not in contact with the cells.

2. The battery pack according to claim 1, comprising the separation member in all spaces between the cells.

3. The battery pack according to claim 1 or 2, wherein the separation member has a support outside the heat insulating portion in plane direction perpendicular to stacking direction of the cells, and the support is in contact with at least one of the cells.

4. The battery pack according to claim 3, wherein a compression modulus of the support in stacking direction of the cells is 0.5 to 100 MPa.

5. The battery pack according to any one of claims 1 to 4, wherein a distance between the noncontact region and each of the cells above the noncontact region is 0.1 to 2.5 mm.

6. The battery pack according to any one of claims 1 to 5, wherein a ratio (S_{N}/S_{I}) of an area of the noncontact region (S_{N}) to an area of the heat insulating portion (Si) in plan view is 0.3 to 1.

7. The battery pack according to any one of claims 3 to 6, wherein a ratio (S_{S}/S_{P}) of an area of the support (Ss) to an area of the separation member (S_{P}) in plan view is 0.02 to 0.2.

8. The battery pack according to any one of claims 1 to 7, wherein the separation member in plan view is rectangular, and the support on the separation member is linear and forms at least a pair of opposite sides.

9. The battery pack according to any one of claims 1 to 8, wherein the heat insulating portion contains a liquid.

10. The battery pack according to claim 9, wherein the heat insulating portion is a porous heat insulating material and the liquid is contained in the porous heat insulating material.

11. The battery pack according to any one of claims 1 to 10, wherein the heat insulating portion is accommodated in an exterior body.

12. The battery pack according to claim 11, wherein the exterior body includes a stack including metal foil and a thermoplastic resin layer.

13. The battery pack according to claim 12, wherein a metal that constitutes the metal foil is at least one of aluminum, copper, tin, nickel, stainless steel, lead, tin-lead alloy, bronze, silver, iridium, and phosphor bronze.

14. A method of producing a battery pack in which cells are stacked, comprising the steps of:
placing a separation member in at least one of spaces between the cells,
wherein the separation member has a heat insulating portion and a compression modulus of the heat insulating portion in stacking direction of the cells is 0.5 to 10 MPa; and
fixing the separation member with pressure applied in thickness direction of the heat insulating portion of the separation member to provide a noncontact region in which the separation member is not in contact with the cells.
